# EUROPÄISCHE PATENTSCHRIFT

(11) **EP 0 493 710 B1**
(45) Veröffentlichungstag und Bekanntmachung des Hinweises auf die Patenterteilung: **03.09.1997**
(21) Anmeldenummer: 91121147.2
(22) Anmeldetag: 10.12.1991
(51) Int. Cl.: C08L 51/04, C08L 23/02

(54) **Thermoplastische Formmasse mit verbesserter Zähigkeit und Steifigkeit**
Thermoplastic moulding composition with improved stiffness and tenacity
Masse à mouler thermoplastique à rigidité et ténacité améliorées

(30) Priorität: 29.12.1990 DE 4042193
(43) Veröffentlichungstag der Anmeldung: 08.07.1992
(73) Patentinhaber: BASF Aktiengesellschaft, 67063 Ludwigshafen (DE)
(72) Erfinder: Seelert, Stefan, Dr., W-6710 Frankenthal (DE); Jung, Andreas, Dr., W-6800 Mannheim 1 (DE); Klaerner, Peter, Dr., W-6719 Battenberg (DE); Bronstert, Klaus, Dr., W-6719 Carlsberg (DE); Hoenl, Hans, Dr., W-6719 Obersuelzen (DE); Ostermayer, Bertram, Dr., W-6900 Heidelberg (DE)

(56) Entgegenhaltungen:
- EP-A- 0 060 525
- EP-A- 0 291 352
- EP-A- 0 310 051

## Beschreibung

Mischungen (Blends) aus schlagfestem Polystyrol und Polyolefinen sind bekannt und vereinen in sich die gute Spannungsrißbeständigkeit und die gute Wasserdampfundurchlässigkeit der Polyolefine mit der guten Verarbeitbarkeit des Polystyrols. Um den Mischungen eine gewisse Zähigkeit zu verleihen, muß ein Verträglichkeitsvermittler Zugegeben werden.

Als Verträglichkeitsvermittler werden z.B. in DE-PS 2 003 916 Blockcopolymerisate des Typs X-Y und X-Y-X genannt, wobei X ein Vinylaromat und Y ein Dienkohlenwasserstoff ist, und das Copolymerisat gegebenenfalls ganz oder teilweise hydriert sein kann. Hydrierte Styrol-Butadien-Styrol-Dreiblockcopolymere werden auch in EP 4 685 und EP 250 970 als Verträglichkeitsvermittler eingesetzt. In EP 42 153 dient unhydriertes Styrol-Butadien-Styrol-Dreiblockcopolymer als Verträglichkeitsvermittler.

In EP 60 524 werden Mischungen aus Polypropylen und schlagfestem Polystyrol mit linearem S-(D-S)ₙ Blockcopolymerisat beschrieben, wobei S Styrol, D Butadien oder Isopren und n eine ganze Zahl bedeutet. Blends aus HDPE und schlagfestem Polystyrol mit S-(D-S)ₙ Blockcopolymerisat werden in EP 60 525 genannt, wobei wiederum S Styrol und n eine ganze Zahl bedeutet, D aber Isopren oder hydriertes Butadien darstellt.

Neben den obengenannten hydrierten oder unhydrierten linearen Blockcopolymerisaten werden in EP 125 227, EP 291 352, EP 310 051, EP 329 283 und US 4 495 323 auch sternförmige, aus Butadien und Styrol aufgebaute Blockcopolymerisate als Verträglichkeitsvermittler in Blends aus schlagfestem Polystyrol und Polyolefinen angegeben.

Den Mischungen aus schlagfestem Polystyrol und Polyolefinen, die mit den bekannten Blockcopolymerisaten als Verträglichkeitsvermittler hergestellt wurden, ist aber zu eigen, daß sie immer noch Nachteile in bezug auf Zähigkeit, Steifigkeit und Wärmeformbeständigkeit haben. Es bestand daher die Aufgabe, Formmassen mit guter Spannungsrißbeständigkeit, guter Wasserdampfundurchlässigkeit und guter Verarbeitbarkeit und verbesserter Zähigkeit, Steifigkeit und Wärmeformbeständigkeit zu entwickeln.

Diese Aufgabe wurde gelöst durch eine thermoplastische Formmasse, die enthält, jeweils bezogen auf die Summe der Bestandteile A, B und C,
A: wenigstens 10 Gew.-% eines Styrol und/oder substituiertes Styrol enthaltenden Polymerisats A, das durch eine Kautschukkomponente schlagzähmodifiziert ist,
B: wenigstens 10 Gew.-% Polyolefin B und
C: 1 bis 20 Gew.-% eines durch anionische Polymerisation unter Kupplung erzeugten Sternblockcopolymerisats C aus Styrol und Butadien, das selektiv hydriert oder selektiv zu mehr als 30% teilhydriert worden ist.

Die Komponente A soll ein schlagfest modifiziertes Styrolpolymerisat sein, das durch Polymerisation von vorzugsweise Styrol und gegebenenfalls kern- oder seitenkettenalkylierten Styrolen in Gegenwart von Kautschuk hergestellt wurde. Vorzugsweise wird ausschließlich Styrol verwendet. Der Kautschukgehalt soll zwischen 3 und 25 Gew.-%, vorzugsweise zwischen 5 und 15 Gew.-% betragen.

Als Kautschuk werden zur Schlagzähmodifizierung von Styrolpolymerisaten geeignete natürliche oder synthetische Kautschuke eingesetzt. Als Kautschuk im Sinne der Erfindung kommt außer Naturkautschuk z.B. Polybutadien, Polyisopren und Mischpolymerisate des Butadiens und/oder Isoprens mit Styrol und anderen Comonomeren, die eine Glastemperatur unter -20°C (nach K.H. Illers und H. Breuer, Kolloidzeitschrift 176 (1961) S. 110) besitzen. Besonders eignen sich Butadienpolymerisate mit einem 1,4-cis-Gehalt, der zwischen 25 und 99 Gew.-% liegt. Es können aber auch Acrylkautschuke, EPDM-, Polybutylen- und Polyoctenamerkautschuke eingesetzt werden. Der mit Styrol gepfropfte Kautschuk (Weichphase) liegt dabei fein verteilt in der als Hartmatrix bezeichneten Polystyrolphase vor. Der mittlere Teilchendurchmesser (d₅₀-Wert der integralen Masseverteilung) liegt z.B. zwischen 200 und 7000 nm. Verfahren zur Herstellung von solchen Styrolpolymerisaten sind bekannt und werden z.B. in "Ullmanns Encyclopädie der technischen Chemie", 4. Auflage, Band 19, Seiten 265 bis 295, Verlag Chemie, Weinheim oder H. Gerrens, Chem. Ing. Tech. 52 (1980), 477 beschrieben.

Geeignetes schlagfestmodifiziertes Polystyrol ist im übrigen handelsüblich; entsprechend geeignete Sorten weisen eine Viskositätszahl der Hartmatrix zwischen 50 und 130 ml/g (gemessen 0,5 %ig in Toluol bei 23°C) auf.

Als Komponente B werden Homo- oder Co-Polymerisate des Propylens und des Ethylens verwendet. Genannt sei Polypropylen, das z.B. nach dem sog. Gasphasenverfahren unter Verwendung von Ziegler-Natta-Katalysatoren hergestellt werden kann und einen Schmelzflußindex (MFI 190/5) von 0,1 bis 90 g/10 min aufweist. In Frage kommt auch Polyethylen, hergestellt nach dem Hoch-, Mittel- oder Niederdruckverfahren mit Dichten zwischen 0,91 und 0,97 g/cm³), oder Copolymerisate von Ethylen z.B. mit Vinylester wie Vinylacetat oder Vinylpropionat, mit Acrylestern oder mit Propylen. Der Comonomerengehalt der Ethylencopolymerisate liegt zwischen 1 und 65 Gew.-%, vorzugsweise zwischen 10 und 45 Gew.-%. Der Schmelzflußindex der Ethylenpolymerisate kann in einem weiten Bereich schwanken und beträgt vorzugsweise 0,5 bis 40 g/10 min (MFI 190/2,16). Ein bevorzugtes Polyolefin ist Polyethylen hoher Dichte (Bereich 0,94 bis 0,97 g/cm³) hergestellt nach dem sog. Phillips-Verfahren (Mitteldruckverfahren). Ein anderes bevorzugtes Polyolefin ist lineares Polyethylen niedriger Dichte (Bereich 0,91 bis 0,94 g/cm³) hergestellt nach dem Gasphasenverfahren. Genannt werden soll auch füllstoffhaltiges Polyethylen, bevorzugt wird in diesem Fall Calciumcarbonat als Füllstoff, der in Form von Kreide vorliegt und besonders bevorzugt einen mittleren Teilchendurchmesser von 0,1 bis 20 µm aufweist. Die Verfahren zur Herstellung der Polyolefine sind bekannt und werden z.B. in "Ullmanns Encyklopädie der technischen Chemie", 4. Auflage, Band 19, Seiten 167 bis 226 beschrieben.

Komponente C ist ein durch anionische Polymerisation unter Kupplung aus Styrol und Butadien erzeugtes Sternblockcopolymerisat, das anschließend selektiv hydriert oder teilhydriert wurde. Die Herstellung sternförmig verzweigter Blockcopolymerisate, die aus Styrol und Butadien aufgebaut sind, ist an sich bekannt. Ein (Teil)Ersatz von Butadien durch Isopren ist möglich. Die Blockcopolymerisate weisen in der Regel Styrolgehalte zwischen 20 und 90 Gew.-% auf, bevorzugt zwischen 55 und 90 Gew.-% und insbesondere zwischen 60 und 80 Gew.-% Styrol auf (Rest Butadien und/oder Isopren).

Verzweigte Sternblockcopolymerisate und deren Herstellung sind z.B. in US-PS 3 281 383 bzw. der GB-PS 985 614 beschrieben. Polymodal aufgebaute verzweigte Blockcopolymerisate sind aus der DE-OS 19 59 922 bekannt. Schließlich sind andersartige, verzweigte Blockcopolymerisate in der DE-OS 25 50 227 beschrieben. Die Kopplungsreaktion zur Herstellung verzweigter Blockcopolymerisate verläuft nicht quantitativ, so daß die verzweigten Blockcopolymerisate aus komplexen Mischungen linearer und verzweigter Blockcopolymerisate bestehen können. Im Sinne der vorliegenden Erfindung sollen jedoch die Umsetzungsprodukte der Kopplung einschließlich der ungekoppelten Anteile als verzweigte Blockcopolymerisate verstanden werden. Bevorzugt werden verzweigte Blockcopolymerisate angewendet, die nach der Lehre der DE-OS 19 59 922 und insbesondere nach der Lehre der DE-OS 25 50 227 (mit verschmierten Übergängen zwischen den Blöcken) hergestellt worden sind und ein mittels GPC bestimmtes Molgewicht von 100 000 bis 300 000, bei einer Sternastzahl von 3 - 5 aufweisen.

Erfindungsgemäß werden die verzweigten Sternblockcopolymerisate in an sich bekannter Weise selektiv hydriert, wobei lediglich die von den Monomerenbausteinen Butadien und/oder Isopren herrührenden Doppelbindungen abgesättigt werden. Derartige Verfahren sind bekannt und können z.B. nach dem in DE-OS 27 48 884 beschriebenen Verfahren durchgeführt werden. Die im ursprünglich vorliegenden verzweigten Sternblockcopolymerisate vorhandenen Doppelbindungen sollen im Sinne dieser Erfindung zu mehr als 30 %, bevorzugt zu mehr als 55 %, besonders bevorzugt zu mehr als 90 % und insbesondere zu mehr als 97 % abgesättigt sein.

Die erfindungsgemäße Formmasse kann zur weiteren Verbesserung der Eigenschaften als Komponente D Zusatzstoffe enthalten, die für die Komponenten A, B und C üblich und gebräuchlich sind. Bei diesen Zusatzstoffen handelt es sich z.B. um Hitze- oder Lichtstabilisatoren, Gleit- oder Entformungsmittel, Schmiermittel, Antistatika, Färbemittel wie Farbstoffe oder Pigmente, Flammschutzmittel oder Verstärkungsmaterialien außer Kreide. Die Zusatzstoffe machen i.a. bezogen auf die Formmasse aus A, B und C bis zu 50 Gewichtsprozent aus.

Die Herstellung der Formmassen erfolgt durch Mischen der Komponenten A, B, C und gegebenenfalls D nach allen bekannten Verfahren. Vorzugsweise geschieht das Vermischen der Komponenten bei höheren Temperaturen, z.B. in der Schmelze, durch gemeinsames Verwalzen, Kneten oder Extrudieren in einem Ein- oder Zweischneckenextruder.

### Beispiele

Für die Herstellung der Beispiele und Vergleichsversuche wurden folgende Produkte verwendet:

### Komponente A:

Schlagfestes Polystyrol mit einem Polybutadiengehalt von 8 %, einem mittleren Teilchendurchmesser (d₅₀ der integralen Masseverteilung) von 2,7 µm, enthaltend 0,12 Gew.-% eines sterisch gehinderten Phenols als Antioxydans und 2,3 Gew.-% Weißöl als Schmiermittel. Die VZ der Hartmatrix beträgt 70 ml/g (0,5 %ig in Toluol bei 23°C).

### Komponente B:

LLDPE Lupolen® 2020 GN der BASF AG (Dichte 0,920 g/cm³ nach DIN 53 479; MFI (190/2,16) zwischen 0,9 und 1,2 g/10 min nach DIN 53 735)

### Komponente C:

- C1:: Polymodal aufgebautes Sternblockcopolymer mit ca. 75 Gew.-% Styrol und 25 Gew.-% Butadien gemäß der Lehre der DE-OS 25 50 227.
- C2:: Polymodal aufgebautes Sternblockcopolymer mit ca. 70 Gew.-% Styrol und 30 Gew.-% Butadien gemäß der Lehre der DE-OS 25 50 227.
- C3:: Polymoldal aufgebautes Sternblockcopolymer mit ca. 75 Gew.-% Styrol und 25 Gew.-% Butadien gemäß der Lehre der DE-OS 25 50 227, dessen Doppelbindungen nach dem in DE-OS 20 13 263 beschriebenen Verfahren selektiv zu 99 % hydriert wurden.
- C4:: Polymodal aufgebautes Sternblockcopolymer mit ca. 75 Gew.-% Styrol und 25 Gew.-% Butadien gemäß der Lehre der DE-OS 25 50 227, dessen Doppelbindungen nach dem in DE-OS 20 13 263 beschriebenen Verfahren selektiv zu 50 % hydriert wurden.
- C5:: Polymodal aufgebautes Sternblockcopolymer mit ca. 70 Gew.-% Styrol und 30 Gew.-% Butadien gemäß der Lehre der DE-OS 25 50 227, dessen Doppelbindungen nach dem in DE-OS 20 13 263 beschriebenen Verfahren selektiv zu 99 % hydriert wurden.
- C6:: Hydriertes SBS-Dreiblockcopolymerisat mit ca. 30 Gew.-% Styrol (Kraton® G 1652 der Shell AG).

Die beschriebenen, die Mischungen charakterisierenden Parameter wurden wie folgt bestimmt:

Vicattemperatur VST/B nach DIN 53 460,
Zugfestigkeit, Reißfestigkeit, Reißdehnung und E-Modul nach DIN 53 455 Durchstoßarbeit (Gesamtarbeit W_{ges}) bei 23°C und -40°C nach DIN 53 443 Lochkerbschlagzähigkeit aₖₗ bei 23°C und -40°C nach DIN 53753.

In den Beispielen 1 bis 3 und den Vergleichsversuchen V1 bis V3 wurden 67,7 Gew.-% der Komponente A und 28,3 Gew.-% der Komponente B mit jeweils 4 Gew.-% der verschiedenen Komponenten C auf einer ZSK 30 der Firma Werner & Pfleiderer bei 210°C mit einem Ausstoß von 10 kg/h compoundiert. Aus dem Granulat der Proben wurden zur Ermittlung der Eigenschaften durch Pressen Formkörper hergestellt. Die Ergebnisse der Prüfungen sind in Tabelle 1 zusammengestellt.

**Tabelle 1**

| Beispiel | | | 1 | 2 | 3 | | | |
|---|---|---|---|---|---|---|---|---|
| Vergleichsversuch | | | | | | V 1 | V 2 | V 3 |
| Art der Komponente C | | | C 3 | C 4 | C 5 | C 1 | C 2 | C 6 |
| Vicat VST/B | | [°C] | 79 | 77 | 77 | 73 | 70 | 62 |
| Zug-E-Modul | | [N/mm²] | 1060 | 1050 | 1120 | 970 | 930 | 660 |
| Zugfestigkeit | | [N/mm²] | 19 | 18 | 19 | 15 | 14 | 13 |
| Reißfestigkeit | | [N/mm²] | 19 | 18 | 19 | 15 | 16 | 15 |
| Reißdehnung | | [%] | 122 | 101 | 112 | 33 | 48 | 53 |
| ^{a}kl | 23°C | [kJ/m²] | 38 | 30 | 39 | 12 | 14 | 23 |
| ^{a}kl | -40°C | [kJ/m²] | 18 | 17 | 24 | 7 | 12 | 16 |
| Durchstoßarbeit | 23°C | [Nm] | 31 | 29 | 35 | 8 | 9 | 7 |
| Durchstoßarbeit | -40°C | [Nm] | 26 | 27 | 28 | 3 | 15 | 8 |

Den Beispielen 1 bis 3 der Tabelle 1 kann man entnehmen, daß durch den Einsatz der erfindungsgemäßen Komponenten C3 bis C5 gegenüber den Vergleichsversuchen V1 bis V3 deutliche Steigerung der Zähigkeit (Reißdehnung, aₖₗ, Durchstoßarbeit), der Steifigkeit (Zugfestigkeit, E-Modul) und der Wärmeformbeständigkeit (Vicat) zu beobachten sind.

Die Herstellung der Mischungen der Beispiele 4 bis 5 und der Vergleichsversuche V4 bis V5 erfolgte auf einem Laborextruder der Firma Haake Buchler, Rheocord System 40, bei 210°C mit einem Ausstoß von 1 kg/h. Die Komponenten A, B, C2 und C3 wurden in unterschiedlichen Verhältnissen eingesetzt. Aus dem Granulat der Proben wurden zur Ermittlung der Eigenschaften durch Pressen Formkörper hergestellt. Die Ergebnisse der Prüfungen sind in Tabelle 2 zusammengestellt.

**Tabelle 2**

| Beispiel | | | 4 | | 5 | |
|---|---|---|---|---|---|---|
| Vergleichsversuch | | | | V4 | | V5 |
| A | | | 55 | 55 | 33 | 33 |
| B | | | 41 | 41 | 63 | 63 |
| C 2 | | | | 4 | | 4 |
| C 3 | | | 4 | | 4 | |
| Zug-E-Modul | | [N/mm²] | 705 | 642 | 324 | 251 |
| Zugfestigkeit | | [N/mm²] | 16 | 12 | 11 | 11 |
| Reißfestigkeit | | [N/mm²] | 17 | 13 | 19 | 9 |
| Reißdehnung | | [%] | 108 | 19 | 350 | 112 |
| ^{a}kl | 23°C | [kJ/m²] | >42 | 17 | k.B. | k.B. |
| ^{a}kl | -40°C | [kJ/m²] | 25 | 12 | 57 | 20 |
| Durchstoßarbeit | 23°C | [Nm] | 21 | 4 | 36 | 19 |
| Durchstoßarbeit | -40°C | [Nm] | 18 | 2 | 39 | 9 |

Den Beispielen 4 und 5 der Tabelle 2 ist zu entnehmen, daß durch den Einsatz der erfindungsgemäßen Komponente C3 auch bei anderen Verhältnissen der Komponenten A und B eine deutliche Steigerungen der Zähigkeit (Reißdehnung, aₖₗ, Durchstoßarbeit) der Steifigkeit (E-Modul) und der Wärmeformbeständigkeit (Vicat) im Vergleich zu den Vergleichsversuchen V4 und V5 auftreten.

## Patentansprüche

1. Thermoplastische Formmasse, enthaltend, jeweils bezogen auf die Summe der Bestandteile A, B und C,
A: wenigstens 10 Gew.-% eines Styrol und/oder substituiertes Styrol enthaltenden Polymerisats A, das durch eine Kautschukkomponente schlagzähmodifiziert ist,
B: wenigstens 10 Gew.-% Polyolefin B und
C: 1 bis 20 Gew.-% eines durch anionische Polymerisation unter Kupplung erzeugten Sternblockcopolymerisats C aus Styrol und Butadien, das selektiv hydriert oder selektiv zu mehr als 30% teilhydriert worden ist.

2. Thermoplastische Formmasse nach Anspruch 1, enthaltend als Komponente C ein durch anionische Polymerisation unter Kupplung erzeugtes Sternblockcopolymerisat aus 55 bis 90 Gew.-% Styrol und 45 bis 10 Gew.-% Butadien, das eine mittlere Sternastzahl von 3 bis 12 aufweist und ein mittels GPC bestimmtes mittleres Molekulargewicht von 100 000 bis 300 000 besitzt.

3. Thermoplastische Formmasse nach Anspruch 1, enthaltend als Komponente B Polyethylen.

4. Thermoplastische Formmasse nach Anspruch 3, enthaltend als Komponente B füllstoffhaltiges Polyethylen.

5. Thermoplastische Formmasse nach Anspruch 3, enthaltend als Komponente B Polyethylen hoher Dichte (HDPE).

6. Thermoplastische Formmasse nach Anspruch 3, enthaltend Komponente B Polyethylen niedriger Dichte (LDPE).

7. Thermoplastische Formmasse nach Anspruch 3, enthaltend als Komponente B lineares Polyethylen niedriger Dichte (LLDPE).

8. Thermoplastische Formmasse nach Anspruch 1, enthaltend als Komponente B Polypropylen.

9. Thermoplastische Formmasse nach Anspruch 1, enthaltend Komponente C mit einem Hydrierungsgrad von 50 bis 100 %.

10. Thermoplastische Formmasse nach Anspruch 1, enthaltend, bezogen auf 100 Gewichtsteile A + B + C, 0,05 bis 50 Gewichtsteile übliche Zusatzstoffe (Komponente D).

## Claims

1. A thermoplastic molding material containing, in each case based on the sum of constituents A, B and C,
A: at least 10% by weight of a polymer A which contains styrene and/or substituted styrene and has been impact-modified by a rubber component,
B: at least 10% by weight of a polyolefin B and
C: from 1 to 20% by weight of a star block copolymer C which has been produced by anionic polymerization with coupling from styrene and butadiene and has been selectively hydrogenated or selectively partially hydrogenated to the extent of more than 30%.

2. A thermoplastic molding material as claimed in claim 1, wherein component C is a star block copolymer which has been produced by anionic polymerization with coupling from 55 to 90% by weight of styrene and from 45 to 10% by weight of butadiene and has a mean number of star branches of from 3 to 12 and a mean molecular weight, determined by GPC, of from 100,000 to 300,000.

3. A thermoplastic molding material as claimed in claim 1, wherein component B is polyethylene.

4. A thermoplastic molding material as claimed in claim 3, wherein component B is filler-containing polyethylene.

5. A thermoplastic molding material as claimed in claim 3, wherein component B is high-density polyethylene (HDPE).

6. A thermoplastic molding material as claimed in claim 3, wherein component B is low-density polyethylene (LDPE).

7. A thermoplastic molding material as claimed in claim 3, wherein component B is linear low-density polyethylene (LLDPE).

8. A thermoplastic molding material as claimed in claim 1, wherein component B is polypropylene.

9. A thermoplastic molding material as claimed in claim 1, wherein component C has a degree of hydrogenation of from 50 to 100%.

10. A thermoplastic molding material as claimed in claim 1, containing, based on 100 parts by weight of A + B + C, from 0.05 to 50 parts by weight of conventional additives (component D).

## Revendications

1. Masse à mouler thermoplastique, qui contient, rapportés à chaque fois à la somme des constituants A, B et C,
A: au moins 10% en poids d'un polymère A, contenant du styrène et/ou du styrène substitué, qui a été modifié par un composant du type caoutchouc pour lui conférer de la résilience,
B: au moins 10% en poids de polyoléfine B et
C: 1 à 20% en poids d'un copolymère séquencé étoilé C, obtenu par polymérisation anionique sous couplage, constitué de styrène et de butadiène, qui a été sélectivement hydrogéné ou sélectivement partiellement hydrogéné pour plus de 30%.

2. Masse à mouler thermoplastique suivant la revendication 1, qui contient, à titre de composant C, un copolymère séquencé étoilé, obtenu par polymérisation anionique sous couplage, constitué de 55 à 90% en poids de styrène et de 45 à 10% en poids de butadiène, qui présente un indice de ramification étoilée moyen de 3 à 12 et un poids moléculaire moyen déterminé par chromatographie en phase gazeuse de 100 000 à 300 000.

3. Masse à mouler thermoplastique suivant la revendication 1, qui contient du polyéthylène, à titre de composant B.

4. Masse à mouler thermoplastique suivant la revendication 3, qui contient du polyéthylène contenant une charge, à titre de composant B.

5. Masse à mouler thermoplastique suivant la revendication 3, qui contient du polyéthylène haute densité (HDPE), à titre de composant B.

6. Masse à mouler thermoplastique suivant la revendication 3, qui contient du polyéthylène basse densité (LDPE), à titre de composant B.

7. Masse à mouler thermoplastique suivant la revendication 3, qui contient du polyéthylène basse densité linéaire (LLDPE), à titre de composant B.

8. Masse à mouler thermoplastique suivant la revendication 1, qui contient du polypropylène, à titre de composant B.

9. Masse à mouler thermoplastique suivant la revendication 1, qui contient le composant C, avec un degré d'hydrogénation de 50 à 100%.

10. Masse à mouler thermoplastique suivant la revendication 1, qui contient, rapportés à 100 parties en poids de A + B + C, 0,05 à 50 parties en poids d'additifs usuels (composant D).
